# EUROPÄISCHE PATENTANMELDUNG

(11) **EP 0 802 340 A2**
(43) Veröffentlichungstag der Anmeldung: **22.10.1997**
(21) Anmeldenummer: 97105492.9
(22) Anmeldetag: 03.04.1997
(51) Int. Cl.: F16D 1/06

(54) **Keramikteil**

(30) Priorität: 17.04.1996 DE 19615101
(71) Anmelder: Rauschert GmbH & Co. KG, 96347 Steinwiesen (DE)
(72) Erfinder: Kober, Rainer, 96349 Steinwiesen (DE); Drechsel, Ralf, 96349 Steinwiesen (DE)
(74) Vertreter: Weber, Dieter, Dr.

(57) **Zusammenfassung**

Die vorliegende Erfindung betrifft ein Keramikteil (1) von einfacher geometrischer Form, das z. B. als Welle zum Antrieb von Montageteilen verwendet wird, sowie ein Verfahren zur Herstellung eines entsprechenden Keramikteils. Um ein Keramikteil einfacher geometrischer Form zu liefern, das mit verhältnismäßig geringem Aufwand und geringen Kosten mit einer komplexen Kontur versehen werden kann, ist an einen Bereich (1'') des Keramikteils (1) ein Kunststoffteil (2) angeformt.

## Beschreibung

Die vorliegende Erfindung betrifft ein Keramikteil, das z. B. als Welle zum Antrieb von Montageteilen verwendet wird, sowie ein Verfahren zur Herstellung eines entsprechenden Keramikteils.

Beispiele für derartige Keramikteile sind im wesentlichen zylindrisch geformte, keramische Wellen und Achsen. Solche keramische Wellen oder Achsen können kraftschlüssig mit Montageteilen verbunden werden. Da diese Verbindung auf Reibungskräften basiert, ist ihre mechanische Belastbarkeit eingeschränkt. Für höhere mechanische Belastungen werden Wellen mit größeren Dimensionen und eine formschlüssige Verbindung zwischen Welle und Montageteil bevorzugt. Hierfür werden im wesentlichen aus Metall gefertigte Wellen verwendet, da diese günstiger mit einer komplexen Kontur versehen werden können, was für eine formschlüssige Verbindung zwischen Welle und Montageteil erforderlich ist. Die konturgebende Nachbearbeitung einer gebrannten Keramikwelle ist sehr aufwendig und zudem mit verhältnismäßig hohen Kosten behaftet. Eine Rohbearbeitung keramischer Wellen ist aufgrund zu geringer Maßtoleranzen nicht möglich. Die aus Metall gefertigten Wellen weisen jedoch gegenüber keramischen Wellen gewisse Nachteile auf, wie z. B. geringere Korrosionsbeständigkeit in aggressiven Medien und ein höheres Trägheitsmoment, bedingt durch das höhere Gewicht des verwendeten Materials, sowie eine elektrische Leitfähigkeit, die in manchen Anwendungsfällen unerwünscht ist. Außerdem Keramikmaterial wesentlich abriebfester und dadurch unempfindlicher gegen Verschmutzung und ungeschützem Betrieb unter rauhen Bedingungen.

Darüberhinaus bezieht sich die vorliegende Erfindung allgemein auf Keramikteile einfacher Grundform, die für bestimmte Anwendungsfälle eine komplexere Form benötigen.

Gegenüber diesem Stand der Technik liegt der vorliegenden Erfindung die Aufgabe zugrunde, ein Keramikteil einfacher geometrischer Form zu liefern, das mit verhältnismäßig geringem Aufwand und geringen Kosten mit einer komplexen Kontur versehen werden kann.

Gemäß der vorliegenden Erfindung wird diese Aufgabe dadurch gelöst, daß an einen Bereich des Keramikteils ein Kunststoffteil angeformt ist, das dem Fertigteil eine komplexe Kontur verleiht.

Obwohl Kunststoff in der Regel nicht die Stabilität und Beständigkeit von Keramik besitzt, hat es sich bei der Entwicklung der vorliegenden Erfindung herausgestellt, daß es möglich ist, Keramikteilen geeignete Kunststoffmaterialien so aufzuformen, daß es zum einen zu einem festen mechanischen Verbund zwischen Kunststoff und Keramik kommt und zum anderen das fertige Kunststoff-Keramik-Verbundteil hohen mechanischen Belastungen standhält. Die Vorteile dieser Verbindung von Keramik und Kunststoff liegen in den geringen Toleranzanforderungen an das Keramikteil, dessen Nachbearbeitung mit hohen Kosten und großem Aufwand behaftet wäre, und in der einfachen Herstellung und der hohen Maßgenauigkeit des Fertigteils, da das Kunststoffteil bereits während der Herstellung oder im Anschluß daran mit relativ geringem Aufwand im Vergleich zum Keramikteil mit komplexen Konturen versehen und gegebenenfalls mit geringem Aufwand nachbearbeitet werden kann. Gegenüber Metallwellen gewährleistet die hohe Korrosionsfestigkeit der Materialien Keramik und Kunststoff eine höhere Lebensdauer des Fertigteils bei Verwendung in aggressiven Medien, und die hohe Abrieb- und Verschleißfestigkeit der Keramik führt zu geringerer Abnutzung im Gleitlagerbereich. Das im Vergleich mit Metallwellen gleicher mechanischer Belastbarkeit geringere Gewicht des Kunststoff-Keramik-Verbundteils führt zu einem geringeren Trägheitsmoment des Fertigteils, was im Gebrauch mit geringerem Energieaufwand und verbesserten Verschleißeigenschaften einhergeht.

Bevorzugt ist eine Ausführungsform der Erfindung, bei welcher das Kunststoffteil auf das Keramikteil aufgespritzt ist. Hierfür wird bevorzugt hitzebeständiges Kunststoffmaterial mit geeigneten mechanischen Eigenschaften verwendet.

Besonders bevorzugt ist eine Ausführungsform der Erfindung, bei welcher das Keramikteil im wesentlichen zylindrisch geformt ist, wodurch es sich zur Verwendung als Welle zum Antrieb von Montageteilen besonders eignet.

Es hat sich als besonders zweckmäßig erwiesen, wenn der Bereich des Keramikteils, an den das Kunststoffteil angeformt ist, vollständig glasurfrei ist oder glasurfreie Flächen aufweist, da dies eine besonders gute mechanische Verbindung zwischen Kunststoff und Keramikteil gewährleistet. Um eine besonders hohe mechanische Festigkeit bei hohen Drehmomenten zu erzielen, kann der Bereich des Keramikteils, an den das Kunststoffteil angeformt ist, Vorsprünge oder Vertiefungen bzw. Aussparungen aufweisen, die aber nicht besonders maßhaltig sein müssen, oder in einer anderen Art und Weise von der zylindrischen Form abweichen.

Das erfindungsgemäße Verfahren zur Herstellung eines Keramikteils von einfacher geometrischer Form ist dadurch gekennzeichnet, daß an einen Bereich des Keramikteils ein Kunststoffteil angeformt wird.

Vorzugsweise wird hierzu das Kunststoffteil auf das Keramikteil aufgespritzt. Hierbei kann ein Formgebungswerkzeug verwendet werden, das dem Kunststoffteil eine gewünschte komplexe Kontur verleiht oder ihm eine Form gibt, die die Nachbearbeitung vereinfacht. Der Vorteil dieses Verfahrens liegt darin, daß das Kunststoffteil durch das Formgebungswerkzeug mit hoher Maßgenauigkeit hergestellt werden kann, wodurch in den meisten Fällen keine Nachbearbeitung des Fertigteils notwendig ist.

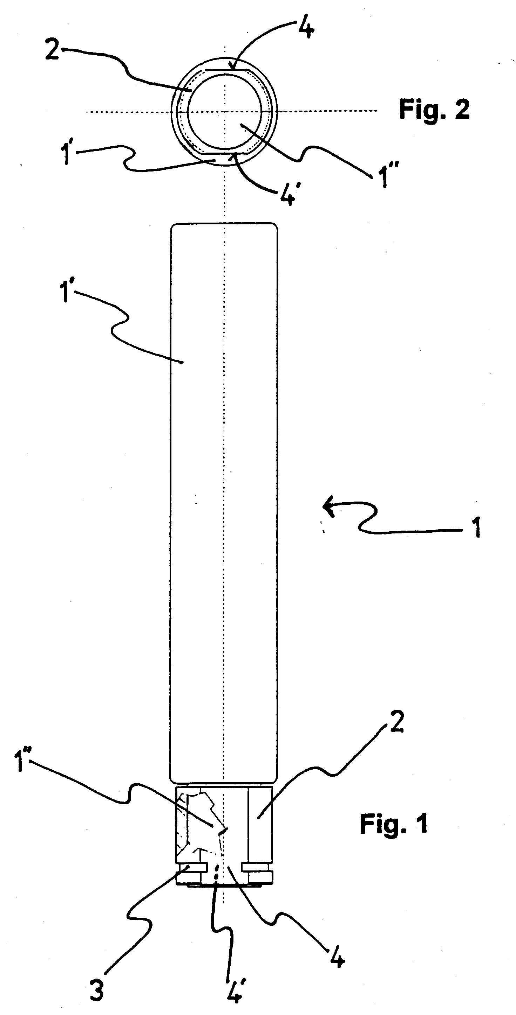

Weitere Vorteile, Merkmale und Anwendungsmöglichkeiten der vorliegenden Erfindung werden anhand der folgenden Beschreibung einer bevorzugten Ausführungsform und der dazugehörigen Figuren 1 und 2 deutlich.
- Figur 1: zeigt eine Seitenansicht einer zylindrisch geformten Welle als Kunststoff-Keramik-Verbundteil.
- Figur 2: ist eine Ansicht desselben Fertigteils in Blickrichtung von dem mit Kunststoff ummantelten Bereich 1'' des Verbundteils in Richtung des nicht ummantelten Bereichs 1'.

Bei dem in Figur 1 dargestellten Kunststoff-Keramik-Verbundteil ist der mit Kunststoff ummantelte Bereich 1'' des Keramikgrundkörpers 1 zylindrisch und von dem zylindrischen nicht ummantelten Bereich 1' abgestuft und besitzt einen geringeren Durchmesser als dieser. Die Kunststoffummantelung besitzt hierin eine zylindrische Grundform mit auf gegenüberliegenden Seiten angeordneten Abflachungen 4 und 4' und einer entlang des Umfangs des Kunststoffteiles verlaufenden, durch die Abflachungen unterbrochenen Nut 3 zur Verbindung der Welle mit einem Montageteil.

Das erfindungsgemäße Anformen eines Kunststoffteils an ein Keramikteil, das insbesondere als Welle zum Antrieb von Montageteilen verwendet werden kann, deren Verbindung mit der Welle aufgrund hoher mechanischer Belastungen einen Formschluß erfordert, stellt eine erhebliche Verbesserung bisher als Wellen verwendeter Fertigteile und der Verfahren zu deren Herstellung dar, da sowohl wegen des verhältnismäßig geringen Zeit- und Arbeitsaufwandes bei der Herstellung des Fertigteils mit hoher Maßgenauigkeit als auch aufgrund des gegenüber Metallteilen relativ geringen Gewichts und der höheren Korrosionsbeständigkeit erhebliche Kosteneinsparungen erzielt werden können.

## Patentansprüche

1. Keramikteil von einfacher geometrischer Form, **dadurch gekennzeichnet, daß** an einen Bereich (1'') des Keramikteils (1) ein Kunststoffteil (2) angeformt ist.

2. Keramikteil nach Anspruch 1, dadurch gekennzeichnet, daß das Kunststoffteil (2) auf das Keramikteil (1) aufgespritzt ist.

3. Keramikteil nach einem der Ansprüche 1 oder 2, dadurch gekennzeichnet, daß das Keramikteil (1) im wesentlichen zylindrisch ist.

4. Keramikteil nach einem der Ansprüche 1 bis 3, dadurch gekennzeichnet, daß das Keramikteil (1) höchstens teilweise glasiert ist.

5. Keramikteil nach einem der Ansprüche 1 bis 4, dadurch gekennzeichnet, daß sich der mit dem Kunststoffteil (2) umgebene Bereich (1'') des Keramikteils (1) in Form, Durchmesser und/oder Oberflächenbeschaffenheit von dem nicht mit dem Kunststoffteil (2) umgebenen Bereich (1') des Keramikteils (1) unterscheidet.

6. Keramikteil nach einem der Ansprüche 1 bis 5, dadurch gekennzeichnet, daß das Kunststoffteil (2) im Vergleich zum Keramikteil (1) komplexere Konturen besitzt.

7. Keramikteil nach einem der Ansprüche 1 bis 6, dadurch gekennzeichnet, daß der Bereich (1'') des Keramikteils (1), dem das Kunststoffteil (2) angeformt ist, ein von dem nicht mit Kunststoff beschichteten Bereich (1') des Keramikteils (1) abgestufter Zapfen ist.

8. Keramikteil nach einem der Ansprüche 1 bis 7, dadurch gekennzeichnet, daß das Keramikteil (1) als eine drehbare Welle oder Achse ausgebildet ist.

9. Keramikteil nach einem der Ansprüche 1 bis 8, dadurch gekennzeichnet, daß das Kunststoffteil (2) eine zylindrische Grundform besitzt und auf gegenüberliegenden Seiten (4, 4') abgeflacht und/oder mit einer in Umfangsrichtung verlaufenden Nut (3) versehen ist.

10. Verfahren zur Herstellung eines Keramikteils von einfacher geometrischer Form, **dadurch gekennzeichnet, daß** an einen Bereich des Keramikteils ein Kunststoffteil angeformt wird.

11. Verfahren nach Anspruch 10, dadurch gekennzeichnet, daß das Kunststoffteil auf das Keramikteil aufgespritzt wird.

12. Verfahren nach einem der Ansprüche 10 oder 11, dadurch gekennzeichnet, daß das Keramikteil höchstens teilweise glasiert wird.

13. Verfahren nach einem der Ansprüche 10 bis 12, dadurch gekennzeichnet, daß zum Anformen des Kunststoffteils ein Formgebungswerkzeug verwendet wird, das dem Kunststoffteil eine von der Form des Keramikteils abweichende oder komplexe Kontur verleiht.

14. Verfahren nach einem der Ansprüche 10 bis 13, dadurch gekennzeichnet, daß dem Kunststoffteil nach dem Anformen an das Keramikteil durch eine Nachbearbeitung, wie z. B. Fräsen, Drehen, Bohren, Schleifen oder Feilen, komplexe Konturen verliehen werden.
